# EUROPEAN PATENT APPLICATION

(11) **EP 1 134 956 A1**
(43) Date of publication of application: **19.09.2001**
(21) Application number: 00830179.8
(22) Date of filing: 13.03.2000
(51) Int. Cl.: H04M 1/274

(54) **Apparatus for processing data relating to a memory for mobile telephone**

(71) Applicant: Del Tacca, Tommaso, 56124 Pisa (IT); Sgherri, Raffaele, 50054 Fucecchio (Firenze) (IT)
(72) Inventor: Del Tacca, Tommaso, 56124 Pisa (IT); Sgherri, Raffaele, 50054 Fucecchio (Firenze) (IT)
(74) Representative: Martini, Lazzaro

(57) **Abstract**

The object of the invention is an apparatus for processing data relevant to a memory of a mobile telephone of a type that can be provided with user's identification means which include means for storing data of telephone books, personal notebooks and the like, the apparatus comprising means (2) for connecting and receiving user's identification means (A; B), a temporary memory (5) and means (4, 7, 8; 62, 60) for bidirectionally transferring said data relevant to notebooks and the like from said temporary memory (5) to user's identification means (A, B) when the latter are connected with and received by said connecting means (2).

## Description

The present invention refers to an apparatus for processing data relating to a memory for mobile telephone. In particular, the invention is prefereably applicable in the processing of data relevant to telephone books and similar archives.

Mobile telephones are known to be provided with means for electronic storage able to store indexes of names and telephone numbers to be used when necessary. In the cellular telephones of old generation (for example, of TACS type) such storage means make part of the telephone unit and cannot be separated therefrom. A drawback in the storing of data, therefore, lies in the impossibility of transferring data files, previously stored in a first unit, for use on a second unit.

Such a drawback has been overcome by the last-generation mobile telephones (for example of the GSM type) which make it possible to utilize a user's identification card, so-called SIM card, able to be housed within a seat suitably provided on these telephone units. The SIM card holds a set of data relevant to the common carrier, networks, user's telephone number, parameters of access to various services, as well as a modifiable and permanent memory intended for storing personal data such as, for example, telephone books or indexes of various kind. In this way, the user may change his/her telephone unit while keeping these data within the SIM card.

With the increase of mobile telephony, there has been also an increase of common carriers and contracts for this type of service. At the same time a trend has come out, according to which the users of mobile telephony make use of more than one SIM card, chenge with some frequency the common carrier and/or, accordingly, the relevant SIM card. The use of a plurality of SIM card and the frequent change thereof call for a re-organization of files of personal telephone data and similar indexes. In other words, every time a new card is acquired, it is necessary to write in it all the data already stored in the previous SIM card, a procedure which is time consuming as it requires the input of tens of different names and numbers.

The object of the present invention is to provide an apparatus able to solve the above mentioned problem. This result has been achieved, according to the invention, by providing an apparatus having the characteristics disclosed in claim 1. Further characteristics being set forth in the dependent claims.

Among the advantages deriving from the present invention one is that the data relevant to personal and/or telephone indexes can be automatically transferred from one SIM card to another in a very short time, that the procedure for processing such data can be easily carried out by the user, that it is made easier to possess many different cards holding the same telephone index, that the apparatus is of simple construction, of limited cost and requires an extremely reduced maintenance for keeping it operative over a prolonged period of time.

These and other advantages and characteristics of the invention will be best understood by anyone skilled in the art from a reading of the following description in conjunction with the attached drawings given as a practical exemplification of the invention, but not to be considered in a limitative sense, wherein:
- Fig. 1 shows a block diagram relating to the connections between two SIM cards and a possible embodiment of the present invention;
- Fig. 2 shows diagrammatically and with details not to scale, a block diagram of a possible embodiment of the present invention;
- Fig. 3 shows diagrammatically and with details not to scale, a block diagram of a possible embodiment of the present invention.

As above mentioned, an apparatus constructed according to the present invention can be used for processing data held in a memory of a mobile telephone, particularly but not exclusively of a type that can be provided with user's identification means consisting of a SIM card or other card. In its most preferred configuration, the unit is utilizable for SIM cards having their larger dimensions (length and width) substantially equal to 2.5 cm x 1.5 cm. In the description that follows, the terms SIM card and identification card will be used as having the same meaning. In the accompanying drawings, the designations (A) and (B) refers to a first or source SIM card and to a second or target SIM card, respectively.

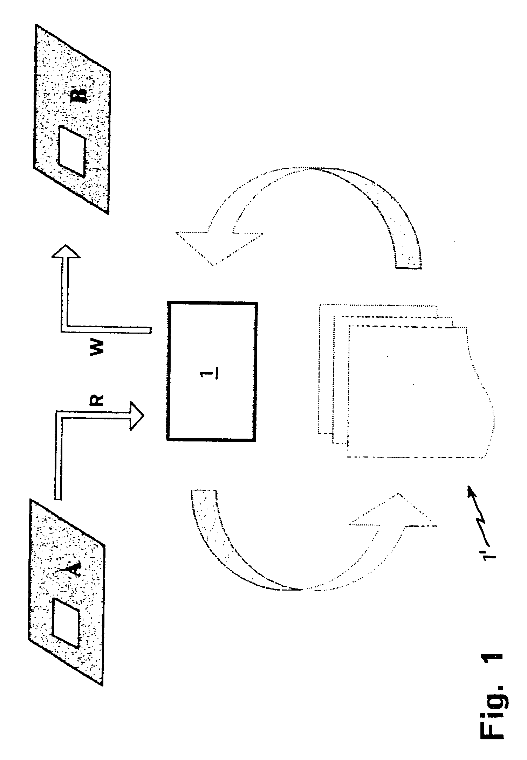

As illustrated also in Fig. 1, the main function of unit (1) is the transfer of data from the source SIM card (A) to the target SIM card (B). A further capacity of the unit (1) is to allow the processing of withdrawn data by using, for example, a personal computer for the treatment of the same data and their permanent memorization on a means other than the SIM card.

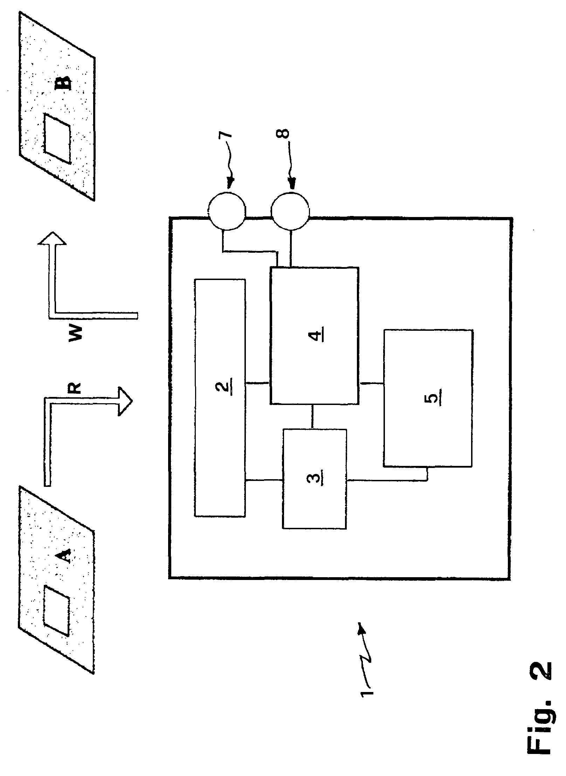

Referring now to Fig. 2, the unit (1) comprises a temporary memory (5) possibly of a volatile DRAM type which is powered by a battery (3). Also provided are means (2) for connection to a SIM card and which include means (4, 7, 8) for bidirectionally transferring data from the temporary memory (5) to a SIM card (A, B) connected to unit (1). Practically, the connecting means (2) may be formed by a seat for securely and removably receiving a SIM card of 2.5cmx1.5cm size; the seat (2) is provided with relevant circuits which allow reading from and writing on a smart card of a type similar to those provided on mobile telephones of known type which, therefore, will not described herein in detail.
For the two-way transfer of data, the apparatus (1) comprises a control device or microcontroller (4) disposed and acting between the SIM card-receiving seat (2) and the temporary memory (5), and a pair of buttons (7, 8) by means of which the user operates the apparatus. The buttons (7, 8) are intended for commanding the reading and the writing of data from or to the SIM card inserted within its seat (2). Upon the reading of data, pressing the relevant button (7) will activate the control device (4) so as to channel the flow (R) of data from the source card (A) to the memory (5); on the contrary, upon the writing of data, the flow (W) of data already stored in the memory (5) will be directed to the target SIM card (B). This configuration results of an extremely simple construction and of reduced cost inasmuch as provision is made, inside a box-like container possibly made of plastics, for a set of electronic components which are readily available on the market and can be easily assembled upon the manufacturing of the apparatus.

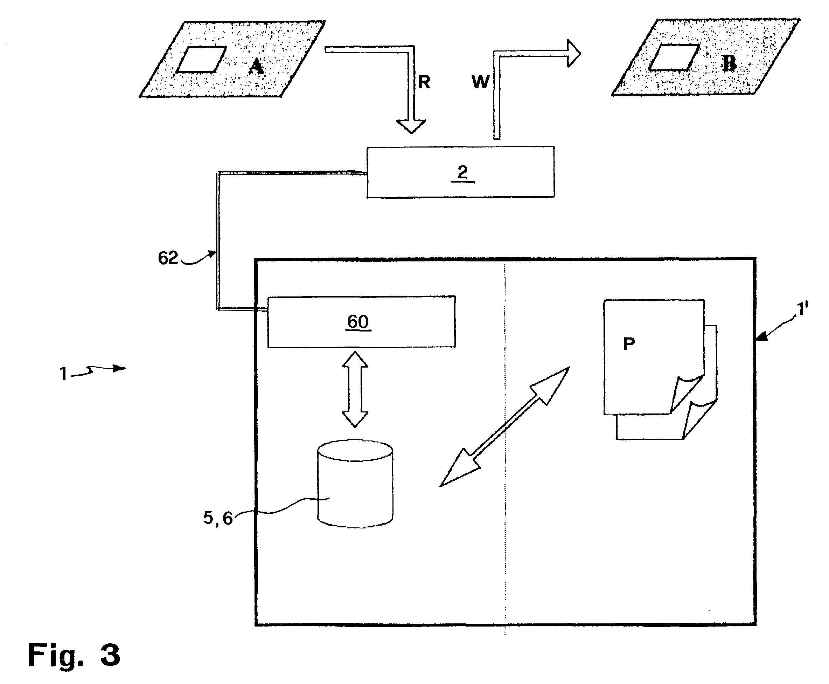

In the embodiment illustrated in Fig. 3, the seat (2) is connected to a personal computer (1') and is able to receive a SIM card of 2.5cmx1.5cm size. The connection can be made, for example, by using a cable (62) connected with a serial port of USB type (60). In this apparatus configuration, the temporary memory (5) may be the computer's RAM and, therefore, can be connected to permanent storage means (6), such as the hard disc of the same computer, or to portable storage means such as CD-Rom or floppy discs.

The use of a computer allows data from the SIM card to be processed far more easily than when using keyboards of mobile telephones and relevant resident software. In practice, it is possible to use various computer programs (designated by P in Fig. 3) for storing data, writing up and modifying lists, etc.

## Claims

1. Apparatus for processing data relevant to a memory of a mobile telephone of a type that can be provided with user's identification means which include means for storing data of telephone books, personal notebooks and the like, apparatus **characterized in that** it comprises means (2) for connecting and receiving user's identification means (A; B), a temporary memory (5) and means (4, 7, 8; 62, 60) for bidirectionally transferring said data relevant to notebooks and the like from said temporary memory (5) to user's identification means (A, B) when the latter are connected with, and received by said connecting means (2).

2. Apparatus according to claim 1, **characterized in that** said connecting means (2) consist of a seat for securely and removably housing a SIM card.

3. Apparatus according to claim 1, **characterized in that** said connecting means (2) consist of a seat for securely and removably housing a SIM card having a larger size substantially equal to 2.5 cm x 1.5 cm.

4. Apparatus according to claim 1, **characterized in that** it comprises a control device or microcontroller (4) disposed and acting between said connecting means (2) and said temporary memory (5), and suitable for directing the flows of data (R, W) from the connecting means (2) to the temporary memory (5) or vice versa, and control means (7, 8) connected with, and acting on said device (4) to drive the latter and cause it to direct said data either in one direction (R) or in the opposite direction (W).

5. Apparatus according to claim 1, **characterized in that** said temporary memory (5) is connected to means (6) of permanent storage.

6. Apparatus according to claim 5, **characterized in that** said means (6) of permanet storage consist of a computer's memory.

7. Apparatus according to claim 1, **characterized in that** said temporary memory (5) is connected to means (P) of data processing.
